Europäisches Patentamt

European Patent Office

Office européen des brevets

(11) Publication number: **0 442 720 A1**

# EUROPEAN PATENT APPLICATION

(21) Application number: **91301161.5**

(51) Int. Cl.⁵: **B65D 5/56**, B65D 81/20

(22) Date of filing: **13.02.91**

(30) Priority: **15.02.90 US 480397**

(43) Date of publication of application:
**21.08.91 Bulletin 91/34**

(84) Designated Contracting States:
**AT BE CH DE DK ES FR GB GR IT LI LU NL SE**

(71) Applicant: **W.R. Grace & Co.-Conn.**
**1114 Avenue of the Americas**
**New York New York 10036(US)**

(72) Inventor: **Barger, Steven Dale**
**530 Cambridge Drive**
**Spartanburg, SC 29301(US)**
Inventor: **Todd, Charles McClelland**
**214 Whittlin Way**
**Taylors, SC 29687(US)**

(74) Representative: **Barlow, Roy James et al**
**J.A. KEMP & CO. 14, South Square, Gray's**
**Inn**
**London WC1R 5LX(GB)**

(54) **Lined container and method of making same.**

(57) A method of making a lined container includes the steps of providing a container (10) having an outer shell (12) comprising a substantially rigid bottom (16), side (18a, 18b) and end (20a, 20b) walls, the walls defining a cavity (22) with interior surfaces and an upper rim (24), and a thermoplastic liner (14) covering the interior surfaces of the cavity; and providing a fluted profile on the interior surface of the bottom wall of the outer shell, in communication with the thermoplastic liner. The invention also provides such a container.

FIG. 1a

EP 0 442 720 A1

Field of the Invention

The present invention relates to the packaging of products, especially food products, and more particularly to an improved, semirigid lined container with a fluted or undulating interior bottom surface.

Background of the Invention

Rigid and semi-rigid containers made from corrugated board and thermoplastic materials are available in the market place in a variety of sizes. These containers, with or without interior thermoplastic liners or exterior coatings or laminates, offer the packager a container which can withstand the weight of many products, accommodate the large volume of many products, and often provide stackability where necessary for shipping or storage.

Examples of patents directed to containers include U. S. Patent No. 3,927,821 (Dunning) which discloses a paper board carton having a bottom panel, and side and end walls, with a dining film of plastic adhered to the inner surface of the paper board.

British Patent Specification 1,136,885 (Andersson) discloses a container having an outer casing of comparatively stiff sheet material such as cardboard and an unbroken protective layer of thermoplastic material disposed in the casing. The casing comprises a bottom and a number of upright side walls.

Some containers include horizontal flanges extending either towards the interior of the container or towards the exterior of the container. Examples of patents directed to such containers include in. U. S. Patent No. 2,660,362 (Schilling) disclosing a carton with horizontal flaps at each end thereof, and a cover sheet heat sealed to the flaps.

U. S. Patent No. 3,866,816 (Bemiss) discloses a self supporting outer paper board tray and a plastic liner, as well as laterally extending flanges around the upper edge of the paper board or plastic liner.

U. S. Patent No. 4,533,065 (Chazal et al) discloses a container having a cardboard portion, portions of synthetic material, and an externally extending flange around the upper edge of the container.

Corrugated board containers internally lined with a thermoplastic liner are useful in many packaging applications, including food packaging.

Conventional corrugated paperboard includes two outer liner boards, and an intermediate fluted board located between the two outer liner boards.

Beneficial features of the board (rigidity and strength) are combined with the oxygen and moisture barrier properties of polymeric film. The thermoplastic liner should adhere to the inside surface of the corrugated board container with sufficient adhesion to prevent separation of the liner from the board surface during packaging, storage and distribution. When making a container such as that disclosed in U. S. Patent No. 4,722,474 (Dropsy), using equipment such as that disclosed in U. S. Patent No. 4,862,671 (Lanoiselee et al) adhesion of the liner to the board can be affected by many factors such as temperature settings on the machine, the physical and chemical composition of the liner, etc.

When using the containers just described for packaging some meat and cheese items, it is often advantageous to use modified atmosphere packaging (MAP) techniques well known in the art. MAP can extend the shelf life of some food items. The effectiveness of MAP packaging depends in part on being able to channel gases evenly around the food product.

The inventors have discovered that by providing fluted or undulating channels on or in the bottom of the container, thermoplastic liner film will adhere better to the corrugated board. These flutings also provide effective channels for circulating gases such as carbon dioxide, oxygen, or nitrogen around the food product.

It is therefore an object of the present invention to provide a semirigid or substantially rigid lined container which exhibits good adhesion of the liner to the inside bottom surface of the container, and good circulation of MAP gases around a contained food product.

Summary of the Invention

In one aspect of the invention, a method for channeling gases in a lined container comprises providing a container having an outer shell comprising a substantially rigid bottom wall, side and end walls, the walls defining a cavity with interior surfaces and an upper rim, and a thermoplastic liner covering the interior surfaces of the cavity; and providing a fluted profile on the interior surface of the bottom wall of the outer shell, in communication with the thermoplastic liner.

In another aspect of the invention, a container comprises an outer shell having a substantially rigid bottom, side and end walls, the walls defining a cavity with interior surfaces and an upper rim, and a thermoplastic liner covering the interior surfaces of the cavity; and a fluted profile on the interior surface of the bottom wall of the outer shell, in communication with the thermoplastic liner.

Brief Description of the Drawings

The invention may be further understood by reference to the drawings in which:

FIG. 1a is a side view of an improved container in accordance with the present invention;

FIG. 1b is a more detailed cross sectional view of the bottom wall of the container;

FIG. 2a is a perspective view of an embodiment of the outer shell of the container;

FIG. 2b is a perspective view of an alternative embodiment of the outer shell of the container; and

FIG. 3 is a detailed cross sectional view of an alternative embodiment for the bottom wall of the container.

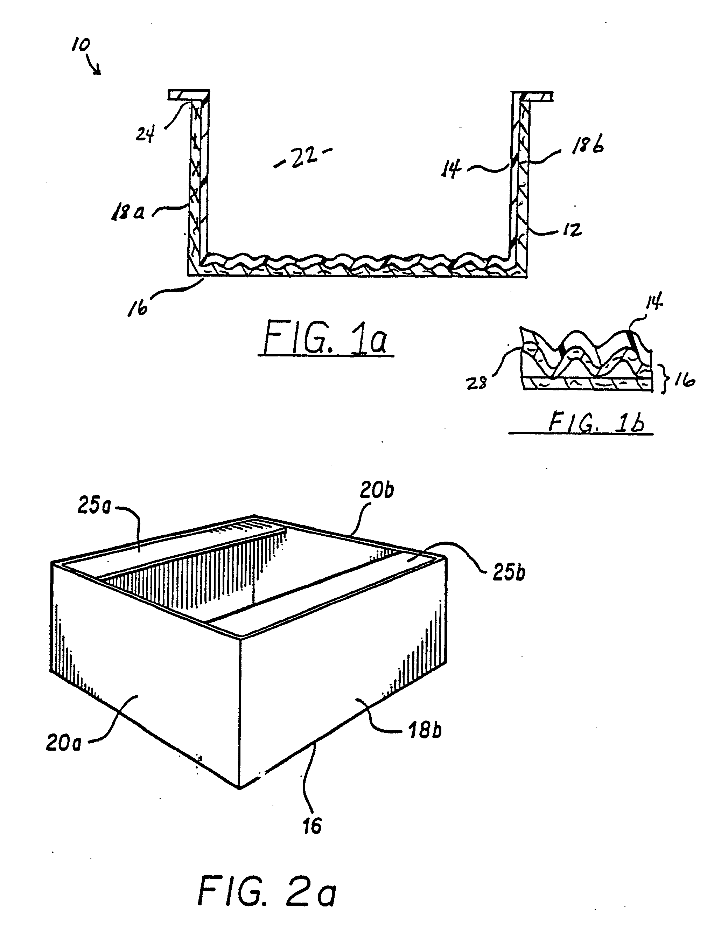

Referring to Figure 1a, a container 10 includes an outer shell 12 and an inner liner 14.

The outer shell 12 is preferable made from substantially rigid corrugated board, or alternatively a plastic material such as a thermoplastic or thermoset material.

The term "substantially rigid" as used herein refers to materials such as corrugated paperboard, thermoplastic materials, and other materials which exhibit sufficient rigidity or resistance to deformation to qualify as a suitable material for the construction of a container, a container wall, or a sheet. This term also includes materials sometimes referred to as "semi-rigid" which exhibit some flexibility but are nevertheless suitable for wall panels, bottom walls and similar structural surfaces.

If a corrugated paper board material is used, such material can be rendered water resistant by the addition of an outer coating or by the use of various hydrophobic materials within the paper material.

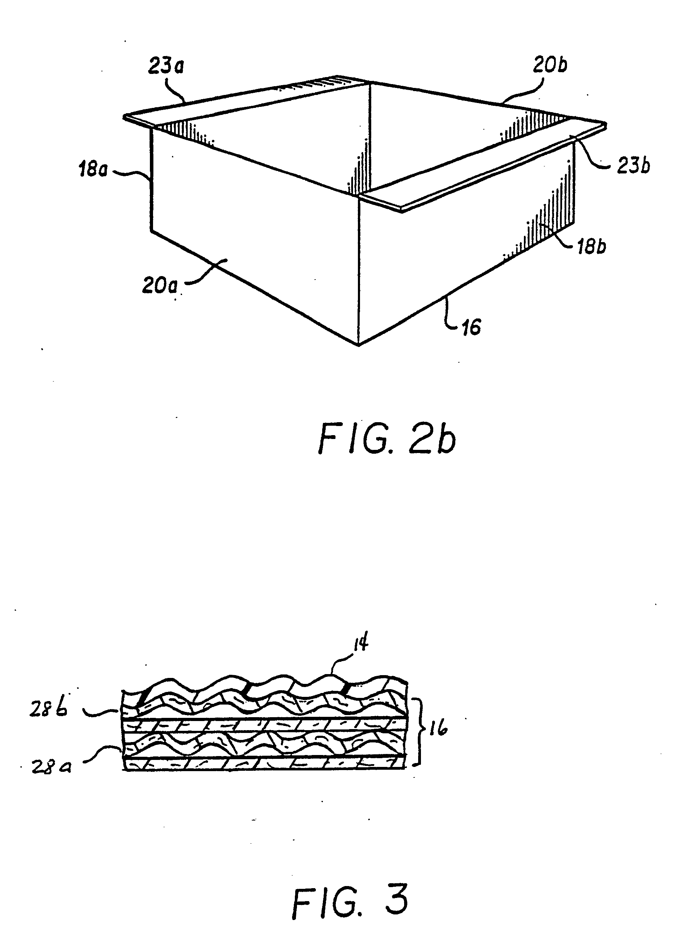

The outer shell includes a bottom wall 16, side walls 18a and 18b and end walls 20a and 20b (see Figures 2a and 2b).

The bottom, side and end walls define a cavity 22 within which a food or nonfood product 26 such as meat or cheese can be placed. Outer shell 12 also defines an upper rim 24 consisting of the upper leading edges of the side walls 18a, b and end walls 20a, b.

Upper rim 24 is typically simply the upper end of each of the four vertical walls 18 and 20. A horizontal flange may also be used, extending either outward from upper rim 24 or inward towards cavity 22. An example of the former is described in U. S. Patent No. 4,469,258 (Wright et al) and an example of the latter is described in U. S. Patent 4,722,474 (Dropsy). Figure 2b graphically depicts outwardly extending flanges 23a and 23b. Figure 2a depicts inwardly extending flanges 25a and 25b.

Inner liner 14 is preferably a heat sealable thermoplastic material which is bonded by heating, gluing or other suitable means to the interior surface of the bottom wall 16 and the side and end walls 18a, b and 20a, b. The liner 14 is preferably thermoformed to the outer shell 12 at the interior surface thereof.

Liner 14 is preferably made from a film, laminate or coextruded laminate. It preferably contains at least one oxygen barrier layer, i.e. the overall oxygen transmission of the liner 14 is preferably below about 100 cubic centimeters per square meter at standard conditions (ASTM 3985). This oxygen barrier feature enhances the usefulness of this invention for packaging perishable food products such as cheese or meat, or other products whose shelf life, quality or utility is adversely affected by the presence of oxygen.

Alternatively, liner 14 may be made from a film having high oxygen permeability, i. e. having a high oxygen transmission rate. Such a film can be useful in applications such as the packaging of cut vegetables.

As illustrated in Figure 1, liner 14 lines the entire interior surface of shell 14 defined by the bottom, side and end walls. The liner 14 also overlaps the upper rim 24 as shown.

When a horizontal flange is used as part of the shell 14 in the vicinity of upper rim 24, the liner 14 preferably covers the upper surface of such flanges and if desired the lower surface as well.

The usefulness of such a liner is twofold. It provides for the sealing of a top web of suitable construction to form a final package, and it also provides when needed the necessary oxygen, moisture or other barrier protection needed for the contained product. Additionally, in some cases the liner actually holds segments of the carton together, such as disclosed in U. S. Patent No. 3,547,722 (Andersson). Thus, any interior surfaces which define cavity 22 are preferably covered by the liner.

The detailed view of Figure 1b shows a typical conventional corrugated board material, with the top portion (liner board) removed. With the liner board removed, intermediate fluting 28, already present in the conventional board, now forms one of the outer surfaces of the board. The thermoplastic liner 14 adheres to the fluting surface of the corrugated paperboard.

The inventors have found that by stripping away the top liner board to expose fluting 28, and then using this paperboard in the process described in U. S. Patent No. 4,722,474, the resulting container has excellent adhesion between the paperboard and the thermoplastic liner. Channels for circulating MAP gases are also provided.

In an alternative embodiment (Fig. 3) a conventional double walled corrugated paperboard, having two outer liner boards, a central liner, and two intermediate layers of fluting 28a and 28b, is shown with the top liner board removed to expose one of the intermediate fluting layers 28b.

Liner 14 preferably includes oxygen barrier materials to enhance the shelf life of food products. Films. conventional laminates and coextruded laminates may be utilized for liner 14 depending on the choice of product to be packaged and the requirements of the final package. A suitable top web is used to enclose the container and product to produce the final package. The top web can be adhered by means well known in the art to the liner at the top of the container.

Many food and non-food products may be advantageously packaged in accordance with this invention. These products include ground beef, mechanically deboned meats, meat trimmings, coffee grounds. coffee beans, peanuts; prepared foods such as meat loaf, macaroni and cheese, fish fillets; cut vegetables, powdered and granular chemicals, and other pulverulent materials; chunks or pieces of food products, such as beef or pork sub primal cuts, fresh or cooked chicken. Those food products benefiting from MAP or CAP (controlled atmosphere packaging) are especially benefited by the present invention.

Those skilled in the art will readily understand that modifications will become apparent after review of this description of the invention, and that such modifications are within the scope and spirit of the invention as claimed below. As an example, although the outer shell 12 of the cut liner is depicted as a box with two end walls and two side walls at right angles to each other, the shell may contain more than four sides, and may include angled corners.

Also, the exact nature, thickness, and construction of the corrugated board can vary, as long as a fluted or undulating surface is available for adhering to the thermoplastic liner.

The fluting itself can vary in width and height, can be used along the entire bottom surface of the container or only a portion thereof, and can be linear, curvilinear, patterned, etc.

## Claims

1. A method of making a lined container (10) comprising:
   (a) providing a container having
   i) an outer shell (12) comprising a substantially rigid bottom wall (16), side walls (18a, 18b) and end walls (20a, 20b), the walls defining a cavity (22), and
   ii) a thermoplastic liner (14) covering the interior surfaces of the cavity; and
   (b) providing a fluted profile on the interior surface of the bottom wall (16) of the outer shell, in communication with the thermoplastic liner (14).

2. A method according to claim 1, wherein the fluted profile forms a linear, preferably rectilinear, pattern across the interior surface of the cavity.

3. A container (10) comprising:
   (a) i) an outer shell (12) having a substantially rigid bottom wall (16), side walls (18a, 18b) and end walls (20a, 20b), the walls defining a cavity (22), and
   ii) a thermoplastic liner (14) covering the interior surfaces of the cavity; and
   (b) a fluted profile on the interior surface of the bottom wall (16) of the outer shell, in communication with the thermoplastic liner (14).

4. A container according to claim 3 wherein the outer shell is made from corrugated paperboard.

5. A container according to claim 3 wherein the outer shell is made from plastic materials.

6. A container according to any one of claims 3, 4 and 5, wherein the liner is made from a heat-sealable thermoplastic material.

7. A container according to claim 6 wherein the heat sealable thermoplastic material has an oxygen transmission rate of less than 100 $cc/m^2/24$ hr/atmos at 20° C.

8. A container according to any one of claims 3 to 7, wherein the liner is a coextruded laminate.

9. A container according to any one of claims 3 to 7, wherein the liner is a conventional laminate.

10. A container according to any one of claims 3 to 9, wherein the liner is cross-linked.

10

24

18a

16

-22-

14

18b

12

FIG. 1a

14

28

16

FIG. 1b

25a

20b

25b

20a

18b

16

FIG. 2a

FIG. 2b

FIG. 3

European
Patent Office

**EUROPEAN SEARCH
REPORT**

Application Number

**EP 91 30 1161**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X,P | FR-A-2 645 831   (SOCAR) <br> * Abstract * <br><br> – – – | 1-4,6 | B 65 D 5/56 <br> B 65 D 81/20 |
| X | EP-A-0 072 742   (SOCIETE PARISIENNE D'IMPRESSION ET DE CARTONNAGE) <br> * Page 6, line 22 - page 8, line 23; figures 4-9 * | 1,3,6 | |
| Y | | 2,4-5,7-8, 10 <br><br> – – – | |
| Y | US-A-3 515 331   (GUTHRIE) <br> * Column 3, lines 13-17; figure 4 * <br> – – – | 2,4 | |
| Y | WO-A-8 801 592   (GARWOOD) <br> * Page 6, lines 27-28; page 10, lines 13-21; figure 8 * <br> – – – | 5 | |
| Y | US-A-4 278 738   (BRAX) <br> * Column 1, lines 15-19; column 2, lines 18-35; column 8, lines 50-59 * <br><br> – – – – – | 7-8,10 | |

|  | TECHNICAL FIELDS SEARCHED (Int. Cl.5) |
|---|---|
|  | B 65 D |

The present search report has been drawn up for all claims

| Place of search | Date of completion of search | Examiner |
|---|---|---|
| The Hague | 10 May 91 | BRIDAULT A.A.Y. |